# EUROPEAN PATENT APPLICATION

(11) **EP 2 138 958 A1**
(43) Date of publication of application: **30.12.2009**
(21) Application number: 08159151.3
(22) Date of filing: 27.06.2008
(51) Int. Cl.: G06K 9/62

(54) **Sensor signal processing with feature classifier cooperation**

(71) Applicant: Honda Research Institute Europe GmbH, 63073 Offenbach/Main (DE)
(72) Inventor: Bolder, Bram, 63225 Langen (DE); Heracles, Martin, 63179 Obertshausen (DE); Schmüdderich, Jens, 63073 Offenbach (DE); Brandl, Holger, 01309 Dresden (DE)
(74) Representative: Rupp, Christian

(57) **Abstract**

The invention relates to the processing sensor signals in order to classify and evaluate features contained in the sensor signals. The method comprises the steps of:
- extracting features from sensor signals and supplying the features to at least two classifiers for classifying different sensor features, the classifiers
- generating expectation parameters and
- exchanging classification results between classifiers,
wherein each classifier
- uses a common representation for classification results, and
- compares individually its classification results to given global expectation parameters.

## Description

The present invention generally relates to the processing of sensor signals, such as e.g. visual sensors or acoustic sensors, in the context of vehicles (e.g. automobiles, planes, etc.) or robots as well as to vehicles and robots having sensors as well as computing means for such sensor signal processing.

The classification of features of sensor finds application in the field of automotive (see e.g. US 6801662 "Sensor fusion architecture for vision-based occupant detection"), handwriting recognition systems (see e.g. US 5757960 "Method and system for extracting features from handwritten text"), medical image processing (see e.g. US 6217525), speech recognition and robotics.

Automotive applications and robotics are examples of applications where different classifiers (e.g. acoustic and visual) can be present. The output of the classifier(s) can then be used to generate a model of the environment of a vehicle or robot and/or to control actuators of the vehicle or robot based on the model of the environment. A control unit generating control commands for actuators of the vehicle or robot can access the multimodal environmental model in order to decide as to which control command to issue.

Just to give examples: In the context of a vehicle application, the model of the environment can cause an automated emergency breaking. In the context of a robotic application, the model of the environment can cause a gazing, moving (e.g. walking in case of a humanoid biped robot), reaching or gripping action of a manipulator arm of the robot.

The classifier system thus represents a signal processing system for generating a multimodal model of the environment.

For classifying features of sensor signals, many different kinds of classifiers have been proposed. In most cases they are used as single black-boxes ignoring the existence or influence of other classifiers. Cooperative frameworks - especially with more than 2 classifiers - can be found but they have a fixed asymmetry with respect to the preference for one single classifier or have a global control. Both have difficulties when integrating additional classifiers. When building increasingly complex systems with many sensors, there is a need for a large number of classifiers in order to comprehend commonalities between the different sensors features (sensor fusion) or to allow an adaptation of classifiers.

### Object of the invention:

It is the object of the present invention to propose an approach to have cooperating classifiers for classifying different sensor features.

This object is achieved by means of the features of the independent claims. The dependent claims develop further the central idea of the present invention.

According to an aspect of the present invention a method is proposed for processing sensor signals in order to classify and evaluate features contained in the sensor signals, the method comprising the steps of:
- extracting features from sensor signals and supplying the features to at least two classifiers for classifying different sensor features, the classifiers
- generating expectation parameters and
- enabling the transfer of classification results between classifiers, wherein each classifier
- uses a common representation for classification results, and
- compares locally (individually) its results to given global expectation parameters.

Further features, advantages and objects of the present invention will become evident from the following description of embodiments of the present invention, taken in conjunction with the figures of the enclosed drawings.
Fig.1 shows an abstract overview of the system according to the invention illustrating the connection structure and data flow,
Figure 2 shows the information flow of classification results in the matching case, and
Fig. 3 shows a robotic application of the present invention, wherein the dashed lines mark the part that corresponds to Fig 1.

The invention proposes a signal feature classification system having the following aspects:
1) a common representation for classification results of different classifiers,
2) several classifiers for classifying different sensor features,
3) optionally generating expectation parameters which can also be used as teaching signals,
4) local (individual) comparison to given global expectation parameters,
5) transfer or exchange of classification results via a mapping instance, and
6) feedback of global expectation parameters to the classifiers to assist classification or allow learning.

The invention thus allows to dynamically combine multiple classifiers of arbitrary type, with their own input and classification spaces, that can run completely asynchronous to each other. It allows to correlate classification results or to exploit the correlation to guide adaptation. The output of the system can be seen as a dynamical representation of the current scene/scenario and not as a classification result. Since all control is local, systems based on the invention are easily extendible.

The invention proposes a common data representation of the classification results. The representation may consist of a list of values in the range zero to one. Each location in the list denotes a certain entity or cluster that the classifier is able to distinguish between. The values denote the certainty (using any kind of metric) that the respective entity is represented by the input. This concept is commonly known as population coding. Classical classifiers using a winner take all mechanism for their output can be easily integrated in form of an output vector with a single element set to one, the rest zero. The complete list of classification values allows the encoding of uncertainties that need further disambiguation, allows robust classification results if the input is similar to multiple entities, and allows to be neglected if all entries are below a given threshold. The latter allows the encoding of the information that no input features are valid. This is for instance the case for a speech classifier when there is currently no-one speaking. Another reason for the selected representation is to enable the delay of decisions to the latest stage possible. This circumvents the problem of early but wrong decisions.

Before explaining the figures in detail, it is to be noted that In all figures the terms "request", "match", "mismatch", "expectation", and "expectation" denote data structures, i.e. vectors containing a distribution of values. The "evaluation mask" is a component that masks certain entries of a data structure, i.e. it sets certain values to 0. The "associative mapping" maps indices in the vectors to each other.

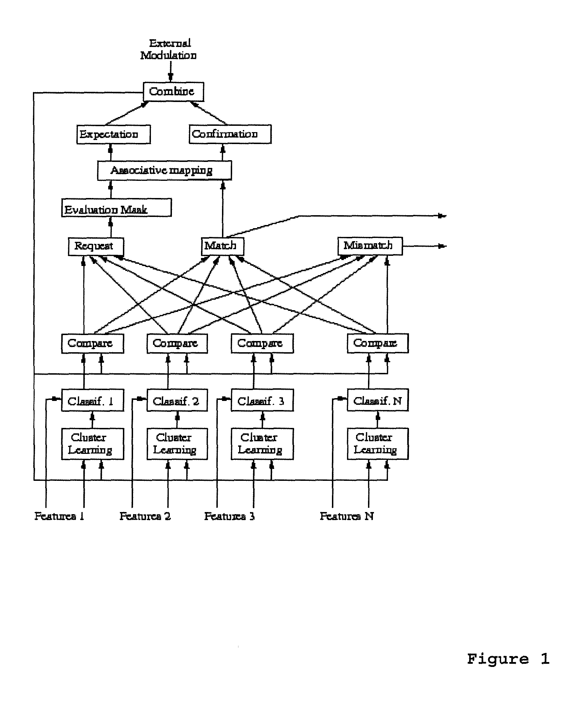

Figure 1 gives an overview of the system according to the invention. As shown in Figure 1, the framework assumes the existence of multiple classifiers CLASSIF 1 to CLASSIF N.

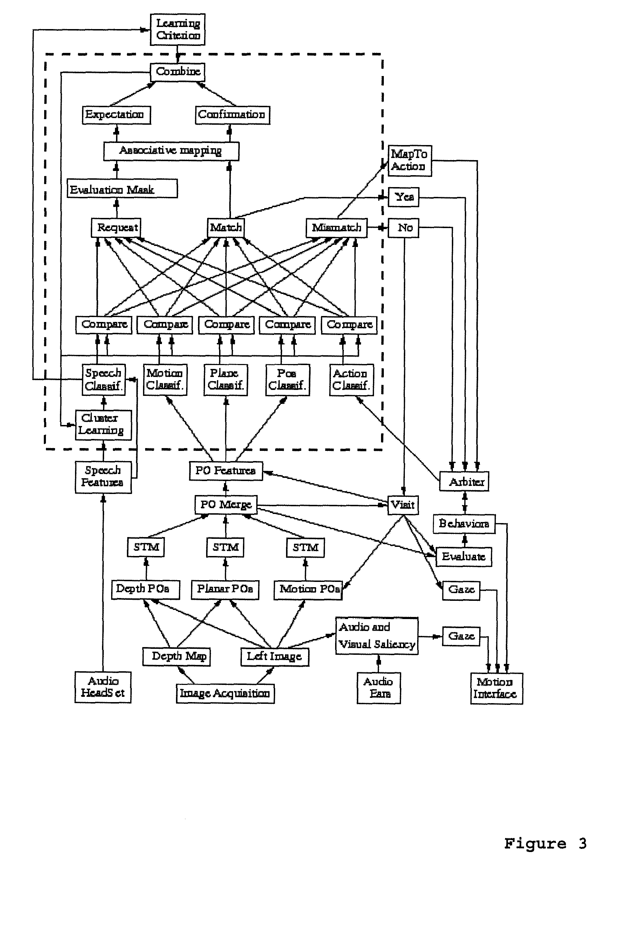

Each classifier is respectively supplied with features FEATURES 1 to FEATURES N extracted by pre-processing a sensor signal. Different features may also be extracted from the same sensor signal (e.g. in case of a image sensor as will be explained in detail later on with reference to figure 3).

These classifiers can be of any type, as long as their output satisfies the common representation format. The invention is not limited to classifiers with respect to sensor input. Internal states of a system can also be classified. All these classifiers can run at their own speed, there is no need for synchronization.

For each classifier individually there can exist global expectation parameters for what the classification result of the classifier is expected to be. These global expectation parameters can be either given externally or be generated by the respectively other classifiers. Externally provided global expectation parameters can either consist of a specific result, any result, or an empty result. Internally, the other classifiers will generate global expectation parameters for specific results.

The local (individual) classification result of each classifier is compared to the globally expected result by a comparing unit COMPARE. If the comparison results in a mismatch, the unit COMPARE generates an event "MISMATCH" that can be evaluated (for instance for communication or mechanisms for conflict resolution). If the comparison results in a match, the system will generate both a confirmation signal "MATCH" and a request "REQUEST" for an empty expectation parameter. The latter can be masked out in the EVALUTION MASK unit.

The associative mapping combines this to the new global expectation parameters. If the request for empty expectation parameters is not masked out, the global expectation parameters will be dropped.

The system thus returns into a state without global expectation parameters. If the expected state is zero (or below a threshold), a non-zero classification result will generate a request for expectation parameters.

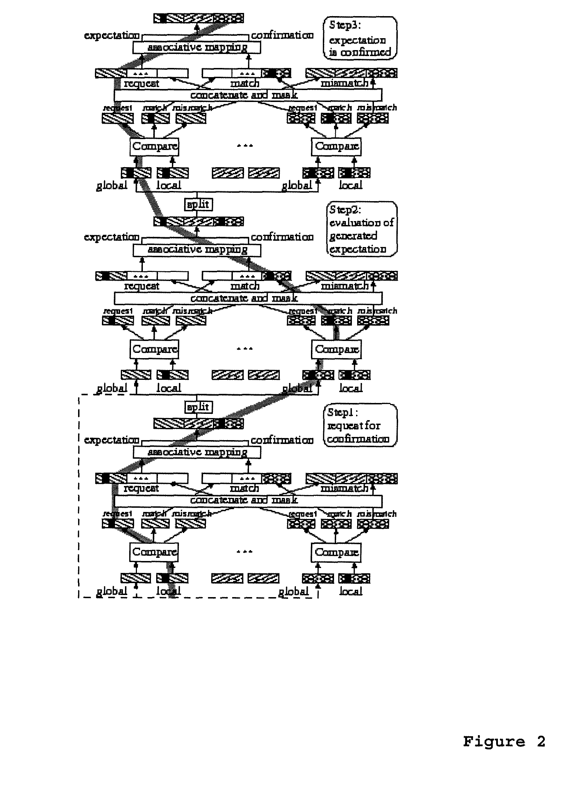

The matches and requests of the different classifiers are concatenated (see Figure 2) and mapped into the classification spaces of the respective other classifiers. The order of concatenation and mapping can depend on the implementation, it will not change the system behaviour. The concatenation reflects the fact that all classifiers are treated equally. Requests can be masked to allow only a subset of the classifiers to generate expectation parameters. This mask can be set dynamically in the EVALUATION MASK unit.

The EVALUTAION MASK unit allows the selection of those classifiers which can generate expectation parameters. In the shown example, only the speech classifier is allowed to do so.

This masking is preferably done before the mapping. The mapping applied to the matches and requests describes the associations between the clusters of the different classifiers. The matches are mapped to the global confirmation state, the requests to the global expectation state. Both are then combined - additionally including external modulation - into the global expectation parameters. This is then split into the global expectation parameters of the comparison elements locally for each classifier.

Figure 2 shows the information flow of classification results in the matching case. The bold line shows the path of state changes. Figure 2 thus illustrates the information flow from bottom to top for the case of an expectation and a match. It should also illustrate that it is actually a loop that couples the different COMPARE units. This loop does all the expectation evaluation, generation, etc. and can run completely asynchronous to the inputs it gets from the different classifiers.

The expectation parameters received by each classifier can be processed in several ways. First, a classifier can use the expectation parameters as a teaching signal and use it for adaptation of its internal model so that the classifier output converges to the expected result. Second, it might be used to modulate the individual classification results for example to resolve ambiguities.

Known learning architectures, for example the Mixture of experts (MoE) architectures as described in [1] (or used in [2]) are designed for the completely different philosophy of solving a complex problem by divide-and-conquer and hence differ from our approach in the following ways. The MoE architecture assumes that expert networks can correctly classify a local region of their input space. The system can not cope with and can not detect contradicting classifications for the same input region. MoE architectures integrate the results of the classifiers globally, whereas our approach proposed local decision making based on a comparison of local versus global classification results. Hence MoE architectures require externally provided teaching signals to train the gating- and expert networks. In contrast, our approach uses the result of the local decision making to bootstrap its classifiers and thereby relies on the self generated expectation parameters. Furthermore the local control in our approach allows the classifiers to run asynchronously. This can not be achieved by a system with global control, since it always needs to wait for the slowest classifier even if this classifier is not significant for the current input or situation. The error-propagation requires the learning rule to be fixed for one MoE-instance and hence prevents the application of individual learning rules for distinct classifiers as proposed in our approach. Since MoE architectures do not contain an explicit mapping instance all expert and gating networks are required to embed their classification result into the complete output space. This is obsolete in our approach since the mapping instance allows arbitrary partitioning of the output space. Additionally this allows the use of the complete combinatorics of classification results. MoE networks always run at the speed of their slowest classifier. Since the classifiers in our approach can run asynchronously, each classifier only affects the speed if its own feedback loop.

Very similar to the MoE architectures are the Ensemble learning architectures, which differ from MoE architectures by not requiring a gating module. Although state of the art approaches like in [3] have proposed ways to combine classifiers working on different feature-sets, they still face the same problems as the MoE architectures. This includes the inability to bootstrap classifiers based on local or global expectation parameters, the necessity of supervised learning, and the requirement for all classifiers to integrate their results into the complete output space.

The systems described in [4] and [5] use classifiers for speech, object properties, and relative object movements. These systems are asymmetric as the speech classifier is considered completely different with respect to the other classifiers which are assumed to be reliable. Because of the assumed reliability of the supportive classifiers, there is no need for their output to consist of the distributions as proposed for our approach. This is also, because there is no method or need to adapt the output or to detect and resolve conflicts. In general, a fixed asymmetry in the classifiers makes the system less flexible, extendable, and prone to classification errors in the preferred classifiers. In order to adapt the model of a certain classifier, it is useful to have the asymmetry. Our system allows to dynamically prefer one classifier over others, just by adapting the evaluation mask.

The system described in [6] differs from our approach in several ways. The system consists of only one classifier that extends over different modalities. There is only one common categorization output space which has a fixed number of categories. Due to the inference mechanism used, this number cannot be changed dynamically. Each possible category has to be defined before hand. In our approach, the output spaces of the single classifiers can dynamically grow. Furthermore one combination of all classifier output spaces can again be regarded as global classification result and hence allows a large variety of combinations.

Hall and Llinas describe in [7] a variety of sensor fusion architectures. Although here the use of different modalities and of classifiers is common to our approach, there is no overlap. Both on the raw data level and on the feature level, the information fused is not derived from classifiers. On the raw data level there is only detection, no classification. It also can only be applied to commensurate sensor data. On the feature level, only a single classifier is used. On the decision level only classifiers that describe the same output space can be fused. In our approach, the classification results are not fused at all, their combinatorics span the classification of different parts of the current scene/situation. Also the level 3 component as described in [7] is not comparable to the term expectation in our approach, since it is not used as feedback into the system. Last but not least, there is no learning method for the classifiers nor framework for learning described in [7].

### IMPLEMENTATION EXAMPLE

### A. OVERVIEW

The invention can be implemented e.g. in a robot, such as e.g. an interactive humanoid robot. Features that are classified may consist of audio speech labels, features from visual percepts such as relative position (left/right), orientation and height (planar surfaces: chair/table), and movement status (moving/still), as well as the system's internal state of behaviour generation (walking/returning to its home position). An overview over the implemented system can be seen in figure 3.

The classifier system in figure 3 comprises:
- a speech classifier,
- a motion classifier supplied with video signals,
- a planar surface classifier,
- a position classifier (POS), and
- an action classifier.

The pre-processing in order to extract features of supplied signals for all classifiers but the speech classifier comprises:
- Image acquisition means and audio signal acquisition means ("ears")
- Means for generating a depth information map
- Means for generating proto objects PO as to the depth, planar and motion information, this information being respectively supplied to short-term memories STM,
- a unit for merging the different stored PO information, and
- a PO feature extraction unit supplying extracted features to the different classifiers with the exception of the speech classifier.

Note that the STMs are means for stabilizing the proto-objects before they are merged and one of them is selected (in the VISIT component) for having its features fed to the classifiers.

### B.1. CLASSIFYING SPEECH LABELS

Speech signals can be sensed with audio sensors such as e.g. an audio headset. Speech features can then be extracted, which is generally known in the art. The output of the speech feature extraction is supplied to a cluster learning unit and then to a speech classifier. In contrast to the other classifier pathways speech is commonly represented as a high-dimensional time-series sampled with sampling rate appropriate for recognition. As usual for speech processing tasks we apply Hidden Markov Models (cf. [8]) for speech representation, and Mel-Cepstrum coefficients for feature extraction (cf. [9]). Each label is modelled as an 8 state HMM with Bakis-topology.

Speech decoding setups on a combined search space comprising HMM-sub-graphs of already acquired label models and some predefined speech labels used for triggering training phases. Speech recognition results are accordingly split up into commands used to trigger this learning procedure and into recognized labels. Label recognition results are transformed into the classifier output format according to the index-coding agreed upon during the learning procedure. The update rate of the speech processing runs at roughly 4 Hz.

### B.2. CLASSIFYING VISUAL PERCEPTS

Visual processing consists of three streams encoding their representations in form of proto-objects PO [11]. The three streams process objects close to the robot, arbitrarily oriented planar surfaces, and motion. Since the streams each run at their own speed, the proto-objects PO of each stream are projected onto a common reference time step using a Kalman filter based extrapolation. These time steps are selected from the fastest processing stream which runs at 20 Hz. A merging mechanism fuses those proto-objects PO of the different streams that originate from the same object. The information from which streams the proto-object originates from are kept.

An attention mechanism selects one of the current proto-objects to be the reference for both the robot behaviours and the extraction of proto-object properties such as position, orientation, and the labels denoting the source streams it originated from. Different combinations of these properties are fed into feature classifiers with predefined clusters. To create a classification result and encode it in a common representation, an activation vector is created. Each dimension of this vector encodes the result of a Gaussian distance function between class-specific cluster centres and the feature vector, incorporating the class specific covariance matrix. That means that each class is represented by a Gaussian in the space of the feature vector. To stabilize these results, the results are accumulated over a certain time window. This accumulation is reset every time the currently focussed proto-object gets lost or is replaced by a new proto-object.

Three classifiers are instantiated. The classifier for positions relative to the robots body can distinguish left and right proto-objects. The classifier for oriented planar surfaces uses the surface normal, the height above the ground, and the label denoting the source stream to distinguish horizontal planar surfaces differing in height such as tables, chairs, and steps. The classifier for motion uses the label denoting the source stream to distinguish moving from still proto-objects.

### B.3. CLASSIFYING INTERNAL STATE OF BEHAVIORS

The behaviour generation of the robot consists of a set of individual behaviour options and an arbiter that selects which behaviours are active at each time. Each behaviour has a fitness value denoting the possibility of execution (for instance for a reaching behaviour for an arm, the fitness is 1 if a target is available and 0 otherwise). The arbiter acts as a dynamical system, and resolves conflicts between concurrent behaviours based on their fitness values, their history, and predefined priorities. The arbiter provides those behaviours that are to be active with an activity signal. The activity states of two selected behaviours (walking towards a target and walking to the home position) are directly combined to form the behaviour classification result.

The activity states of behaviours can be biased by external signals. This can be used to generate gestures or to reactivate a state such as the walking forwards or walking back.

### C. MAPPING OF THE CLASSIFICATION RESULTS

The mapping of the different classification results uses a single predefined association matrix (see Figure 3). The results from the different classifiers are therefore concatenated into a large vector. The elements of the matrix are such that they are 1 at all positions (i,j) where the classification result i should be mapped to the classification result j. The output is generated by a simple matrix vector multiplication. In the present embodiment the matrix is such that one class labels of speech is mapped to a respective label of the other four classifiers and vice versa. Note that this matrix does not define certain speech labels to certain classification results but only the general namability of the classification results of the four other classifiers.

### D. LEARNING MASK

The speech-classifier is able to understand voiced utterances which are mapped to predefined expectation parameters. In the present case, the interactor can raise expectation parameters for each of the four classifier channels. For example, the sentence "Learn where this object is." creates expectation parameters for any result of the position classifier. All other classifiers receive a zero-expectation parameter. The utterance additionally starts a learning session. The expectation results in a match vector that only contains the labels from the position classifier. The mapping maps this to a confirmation vector and thus expectation parameters for the speech classifier. In this way, the current result of the position classifier is used as a teaching signal for the speech classifier.

### E. TRAINING OF NEW SPEECH LABELS

Within a learning session speech labels need to be uttered a few times (3-6) to provide a sufficient sample for model estimation. After the session has stopped (based on a simple time-out criterion) the collected labels are processed depending on the teaching signal provided by the expectation framework. If the most active category was already modelled the according label model becomes updated using maximum a-posteriori training (cf. [10]). If the category is not yet acoustically represented a new label model is created using the best matching label model for initialization. Models are estimated using segmental k-Means given the collected session-samples.

### F. EVALUATION PROCEDURE

The speech classifier can start an evaluation procedure with the recognition of one of the learned speech labels. The whole procedure can be seen in figure 2. The speech recognition results in the creation of a request. The request of the speech classifier is mapped to expectation parameters of the classification result(s) of the respective other classifiers. As soon as the local comparison mechanism finds a match between the expectation parameters and the individual ("local") classification result, a match is triggered.

In case of a mismatch, a mismatch resolution mechanism is triggered and the evaluation procedure is stopped. The mismatch can be resolved by switching the visual attention and/or by the generation of actions by the robot. These can either be communicative actions in form of gestures or in form of the reactivation of the behaviour activity state associated with the state that was not matched.

The match is mapped to a confirmation which sends the expectation parameters of the respective speech label to the speech classifier. This in turn sends both an empty request and a match signal which has no effect. The empty request results in a drop of the global expectation parameters which then ends the evaluation procedure.

Classical approaches only classify one single entity. According to the invention, completely different features are classified which are then associated with each other, i.e. in the multimodal representation of the environment (and internal state or situation) the invention finds different modalities that are associatable. This allows to look for the coincidence of several associatable classifier results such as e.g. the speech utterance "left" and something on the left side of the image sensor.

### GLOSSARY

MAPPING: Method to convert category indices across classifiers.
INTERNAL STATE: Set of variable values describing the state of internal dynamics of a system. These values are generated by the system itself, not by sensors. Sensors can only indirectly influence the internal state.
CLASSIFIER: Subsystem that compares input features to a finite number of representatives (entity/class/category/cluster). It calculates the similarity of the input towards each representative. Classical classifiers select the most similar representative (winner-takes-all).
REQUEST: Classification result that can be used to raise expectation parameters for the results of other classifiers.
MATCH: Classification result that confirms expectation parameters generated by other classifiers.
MISMATCH: Classification result that contradicts expectation parameters generated by other classifiers.
EXPECTATION: Parameters representing the expected classification result of one or more classifiers in form of a distribution of values. They are either based on the classification results of other classifiers or are generated by the system internally, e.g. as a learning mask during teaching.

### Prior Art citations

[1] Hierarchical mixtures of experts and the EM algorithm, Michael I. Jordan, Neural Computation 6, pp. 181-214, 1994
[2] Multimodal high-dimensional data fusion for classification and identification, US Patent: US2005265607
[3] Multiple classifier systems for multisensor data fusion,
   R. Polikar et al., Sensors Applications Symposium, 2006. Proceedings of the 2006 IEEE, Page(s): 180 - 184, Digital Object Identifier: 10.1109/SAS.2006.1634267
[4] Robots that Learn Language: Developmental Approach to Human-Machine Conversations, Naoto Iwahashi, Proc. of Int. Workshop on Emergence and Evolution of Linguistic Communication, pp. 142-179, 2006
[5] A Multimodal Learning Interface for Word Acquisition, Dana H. Ballard and Chen Yu, International Conference on Acoustics, Speech and Signal Processing (ICASSP03), Hongkong, April 6 - 10, 2003
[6] Multimodal Object Categorization by a Robot, Tomoaki Nakamura et al., Proc. of IEEE/RSJ Int. Conf. on Intelligent Robots and Systems, San Diego USA, 2007
[7] An Introduction to Multisensor Data Fusion, David L. Hall and James Llinas, Proceedings of the IEEE, vol 85, no 1, 1997
[8] A Tutorial on Hidden Markov Models and selected applications in speech recognition, Lawrence R. Rabiner, Proc. of IEEE vol 77, pp. 257-286, 1989
[9] Spoken Language Processing, Xuedong Huang et al., Prentice Hall PTR, 2001
[10] Maximum A Posteriori Estimation for Multivariate Gaussian Mixture Observations of Markov Chains, Jean-Luc Gauvain and C.-H. Lee, IEEE Transactions SAP vol 2, pp. 291-298, 1994
[11] Visually Guided Whole Body Interaction, Bram Bolder et al., Proc. of Int. Conf. on Robotics and Automation (ICRA), pp. 3054-3061, 2007

## Claims

1. A method for processing sensor signals in order to classify and evaluate features contained in the sensor signals,
the method comprising the steps of:
- extracting features from sensor signals and supplying the features to at least two classifiers for classifying different sensor features, the classifiers
- generating expectation parameters and
- exchanging classification results between classifiers,
wherein each classifier
- uses a common representation for classification results, and
- compares individually its classification results to given global expectation parameters.

2. The method according to claims 1,
wherein the global expectation parameters are supplied externally or generated by the respectively other classifiers.

3. The method according to claim 1 or 2,
wherein at least one classifier processes a supplied global expectation parameters to aid classification or allow learning.

4. The method according to any of claims 1 to 3,
wherein at least one classifier is supplied with features extracted from audio signals.

5. The method according to any of claims 1 to 4,
wherein at least one classifier is supplied with features extracted from video signals.

6. The method according to any of claims 1 to 5,
wherein at least one classifier classifies a signal encoding an internal state.

7. A robot or vehicle having computing means executing a method according to any of the preceding claims.

8. The robot or vehicle according to claim 7,
furthermore comprising visual and/or acoustic sensing means and actuating means, wherein the actuating means are controlled on the basis of the processed sensor signals.

9. A computer program product,
executing a method according to any of claims 1 to 6 when run on a computing device.
